# EUROPEAN PATENT APPLICATION

(11) **EP 1 237 090 A1**
(43) Date of publication of application: **04.09.2002**
(21) Application number: 01400529.2
(22) Date of filing: 28.02.2001
(51) Int. Cl.: G06F 13/42

(54) **Serial peripheral interface master device, a serial peripheral interface slave device and a serial peripheral interface**

(71) Applicant: ALCATEL, 75008 Paris (FR)
(72) Inventor: Charlier, Vincent Jean-Marie Octave, 1160 Auderghem (BE)
(74) Representative: Plas, Axel

(57) **Abstract**

The present invention relates to a serial peripheral interface master device for communicating with a serial peripheral interface slave device over a serial peripheral interface.

The serial peripheral interface slave device is adapted to send a request, where this request indicates that the serial peripheral interface slave device has data to send. The serial peripheral interface master device in turn, is adapted to receive such a send request from the serial peripheral interface slave device and additionally is able to establish a data-transfer under control of the master decision part at reception of such send request.

## Description

The present invention relates to a Serial peripheral interface master device and a Serial peripheral interface slave device as described in the respective preambles of claim 1 and claim 2. Such a serial peripheral interface master device and a Serial peripheral interlace slave device are already known in the art, e.g. from the ATMEL product specification *"SERIAL PERIPHERAL INTERFACE (SPI) 32-BIT EMBEDDED CORE PERIPHERAL ".* Therein, a serial peripheral interface is described. The SPI interface is a simple 8 bits data synchronous serial interface. This interface is used for fast serial data transfer. Transmitted data and received data are clocked on the same clock, but are independent, making a full duplex communication is possible.

Serial interfaces for data communications between components of data processing systems are numerous. One fairly typical such interface definition is referred to as the SPI (Serial Peripheral Interface) and is incorporated in many microcomputers and peripherals.

The SPI, may be characterised as a synchronous, three-wire serial interface. A master device, such as a microcomputer, and a slave device, such as an analogue-to-digital converter or similar peripheral, communicate by means of their respective SPI interfaces. In a master device, the SPI apparatus comprises a shift register and a clock generator. The least significant bit of shift register has an input connected to a pin labeled MISO (master in/slave out) and the most significant bit of shift register has an output connected to a pin labeled MOSI (master out/slave in). The output of clock-generator is connected to the clock input of shift register and to a pin labelled SCK (for S clock). The SPI apparatus of slave device comprises a shift register. The least significant bit of shift register has an input connected to a pin labelled MOSI and the most significant bit of shift register has an output connected to a pin labelled MISO. The clock input of shift register is connected to a pin labelled SCK. The respective MOSI, MISO and SCK pins of master device and slave device are connected to one another. In addition, one or more chip select signals of master device are connected to enable inputs of slave device can be used from master to slave if more than one slave is connected to the SPI interface. Both master device and slave device have a data path for entering data to be transmitted into and retrieving received data from their respective shift registers.

A problem of such a master slave configuration is that, the transfer is always initiated by the master as he controls the clock and chip select signals and consequently the serial peripheral interface slave device is not able to initiate a data-transmission between the serial peripheral interface slave device and the serial peripheral interface master device.

An object of the present invention is to provide a serial peripheral interface master device, a Serial peripheral interface slave device and a serial peripheral interface of the above known type but wherein the Serial peripheral interface slave device is able to initiate a data-transfer between the serial peripheral interface slave device and the serial peripheral interface master device.

According to the invention, this object is achieved by the serial peripheral interface master device according to claim 1, the serial peripheral interface slave device according to claim 2 and the serial peripheral interface according to claim 6.

In this way, the serial peripheral interface slave device is adapted to send a request, where this request indicates that the serial peripheral interface slave device has data to send. The serial peripheral interface master device in turn, is adapted to receive such a send request from the serial peripheral interface slave device and additionally is able to establish a data-transfer under control of the master decision part at reception of such send request. Hence the start of a data-transfer between the serial peripheral interface master device and the serial peripheral interface slave device at triggering by the send request enables the serial peripheral slave device to initiate such a data-transfer.

Another characterising feature of the present invention is described in claim 3, claim 4 and claim 7.

The serial peripheral interface slave device SPISD is further adapted to temporarily hold a data transfer between the serial peripheral interface master device and the serial peripheral interface slave device by sending a hold data-transfer signal to the serial peripheral interface master device by means of the master decision part which is additionally adapted to hold a data-transfer between the serial peripheral interface master device and the serial peripheral interface slave device at reception of the hold data-transfer signal.

A further characterising feature of the present invention is described in claim 5.

The send request signal may be implmented as an incoming interrupt-signal of the seriaperipheral master device

It is to be noticed that the term 'comprising', used in the claims, should not be interpreted as being limitative to the means listed thereafter. Thus, the scope of the expression 'a device comprising means A and B' should not be limited to devices consisting only of components A and B. It means that with respect to the present invention, the only relevant components of the device are A and B.

Similarly, it is to be noticed that the term 'coupled', also used in the claims, should not be interpreted as being limitative to direct connections only. Thus, the scope of the expression 'a device A coupled to a device B' should not be limited to devices or systems wherein an output of device A is directly connected to an input of device B. It means that there exists a path between an output of A and an input of B which may be a path including other devices or means.

The above and other objects and features of the invention will become more apparent and the invention itself will be best understood by referring to the following description of an embodiment taken in conjunction with the accompanying drawings wherein:
Fig. 1 represents a serial peripheral interface master device SPIMD and a serial peripheral interface slave device SPISD;

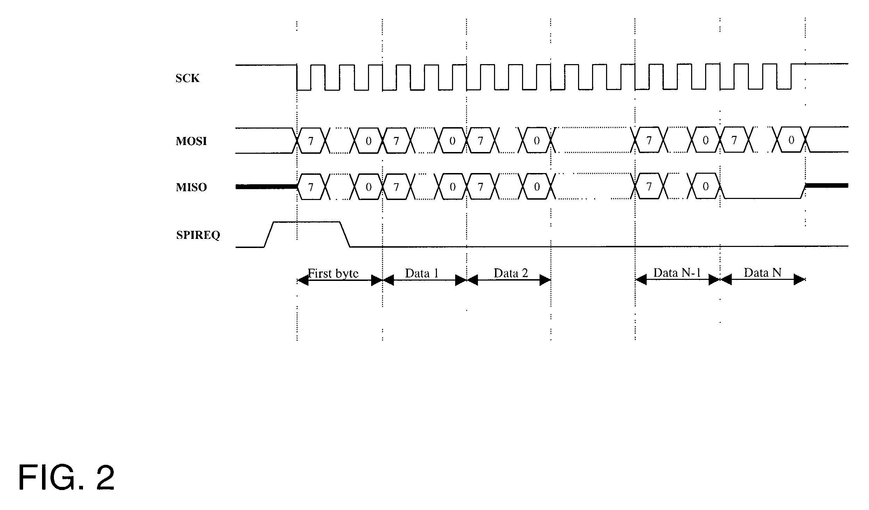

Fig. 2 represents a data transmission between the master device SPIMD and one slave device SPISD where the slave initiated transmission; and

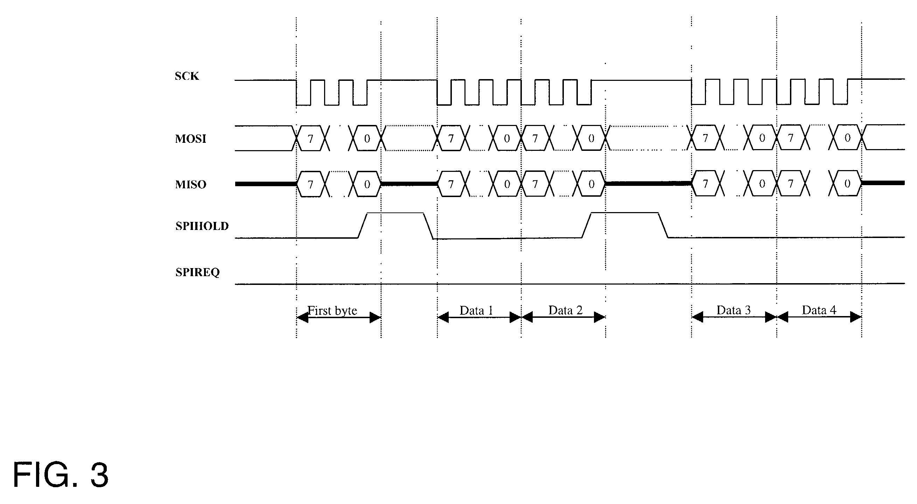

Fig. 3 represents a data transmission between the master device SPIMD and one slave device SPISD wherein the transmission is suspended.

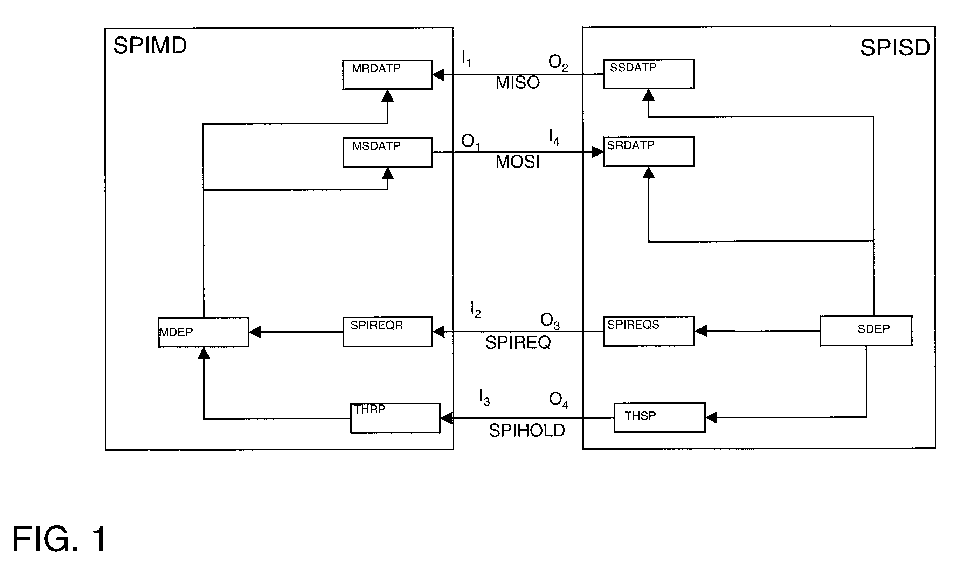

In the following paragraphs, referring to the drawings, an implementation of the method and the related devices according to the present invention will be described. In the first paragraph of this description the main elements of this configuration as presented in FIG. 1 is described. In the second paragraph, all connections between the before mentioned devices and described functional parts are defined. Subsequently all relevant functional parts of the mentioned devices are described followed by a description of all interconnections. In the succeeding paragraph the actual execution of the method for session establishment is described.

Essential elements of this embodiment of the present invention are a serial peripheral interface master device SPIMD and a serial peripheral interface slave device SPISD. In order to keep simplicity in this description only one slave device is described, however a plurality of slave devices possible if chip select lines are added.

The serial peripheral interface master device SPIMD is built-up of a send request reception part SPIREQR, able to receive a send request, indicating that the serial peripheral interface slave device SPISD has data available to be sent, sent by the serial peripheral interface slave device SPISD. The serial peripheral interface master device SPIMD further comprises a master decision part MDEP that is adapted to start a data-transfer between the serial peripheral interface master device SPIMD and a serial peripheral interface slave device SPISD where the data-transfer is triggered by the send request of the serial peripheral interface slave device SPISD. The master decision part MDEP could be implemented as a hardware state machine, a microprocessor or as a mix of both. Besides there is a master send data part MSDATP adapted to send data to a serial peripheral interface slave device and a master receive data part MRDATP adapted to receive data send by the serial peripheral slave device SPISD. These two parts generally are implemented using shift registers. At last there is a transfer hold request reception part THRP which is able to receive such a transfer hold request and subsequently forward the request to the master decision part, that is adapted to put a data transfer in between the serial peripheral interface master device SPIMD and the serial peripheral interface slave device SPISD, in a hold state.

The serial peripheral interface slave device SPISD, in its turn, is built-up of a send request sending part SPIREQS, able to send a send request to a serial peripheral interface slave device SPISD. The serial peripheral interface slave device SPISD indicates with this request that it has data ready to be sent. The serial peripheral interface slave device SPISD further comprises a slave decision part SDEP, which generally is implemented as a state machine, and handles all data transfers between the serial peripheral interface master device SPIMD and a serial peripheral interface slave device SPISD, within the slave device. Besides there is a slave send data part SSDATP, that is adapted to send data to the serial peripheral interface master device SPIMD and a slave receive data part SRDATP that is adapted to receive data send by the serial peripheral master device SPIMD. At last there is a transfer hold request sending part THSP which is able to request the master device to put a data transfer between the serial peripheral interface master device SPIMD and the serial peripheral interface slave device SPISD, in a hold state.

The serial peripheral interface master device SPIMD is coupled to the serial peripheral interface slave device SPISD over a set of serial lines, respectively MISO which is the data-in line of the master device, the MOSI which is the data-out line of the master device, the SPIREQ line which is the line whereon the slave device sends its send request and at last the SPIHOLD line which is the line whereon the slave sends the request to hold the data transmission.

An additional clock line and possible slave device select lines are not shown in figure 1.

The master receive data part MRDATP of the serial peripheral interface master device SPIMD is coupled with an input-terminal to an input-terminal I₁ of the serial peripheral interface master device SPIMD and is additionally coupled with an input to an output of the master decision part MDEP, so that the MDEP has the control of the MRDATP. The master send data part MSDATP has an output-terminal that is at the same time an output-terminal O₁ of the serial peripheral interface master device SPIMD and is additionally coupled with an input to an output of the master decision part MDEP, so that the MDEP has the control of the MSDATP. The master decision part MDEP additionally has an input-terminal that is coupled to an output-terminal of the send request reception part SPIREQR that in its turn is coupled with an input-terminal to an input-terminal I₂ of the serial peripheral interface master device SPIMD. Finally, the master decision part MDEP has an input-terminal that is coupled to an output-terminal of the a transfer hold request reception part THRP, having an input-terminal that is at the same time an input-terminal I₃ of the serial peripheral interface master device SPIMD.

The slave receive data part SRDATP of the serial peripheral interface slave device SPISD is coupled with an input-terminal to an input-terminal I₄ of the serial peripheral interface slave device SPISD and is additionally coupled with an input to an output of the slave decision part SDEP, so that the SDEP can have the control of the SRDATP. The slave send data part SSDATP has an output-terminal that is at the same time an output-terminal O₂ of the serial peripheral interface slave device SPISD and is additionally coupled with an input to an output of the slave decision part SDEP, so that the SDEP can have the control of the SSDATP. The slave decision part SDEP additionally has an output-terminal that is coupled to an input-terminal of the send request sending part SPIREQS that in its turn is coupled with an output-terminal to an output-terminal O₃ of the serial peripheral interface slave device SPISD. Finally, the slave decision part SDEP has an output-terminal that is coupled to an input-terminal of the transfer hold request sending part THSP, having an output-terminal that is at the same time an output-terminal O₄ of the serial peripheral interface slave device SPISD. In this way, the SDEP has the complete control of both the SPIREQ and SPIHOLD signals.

In order to explain the execution of the present invention it is assumed that The SPI interface has completed the previous transfer. The execution of a transfer started by the master is well known for an SPI interface, so this will not be explained in this document. Only the execution of a transmission started by the slave under control of the slave decision part SDEP, is explained.

The send request sending part SPIREQS of the slave device SPISD sets the signal SPIREQ to '1' or in other words: makes the signal SPIREQ active to request a transmission. The send request reception part SPIREQR of the master device SPIMD receives the send request from the slave device SPISD by detecting the active state of the signal. The request indicates that the slave device SPISD has data available to be sent. At detection of the active state of the SPIREQ signal, i.e. the reception of the send-request signal, the signal is passed to the master decision part MDEP of the master device SPIMD that decides to start a data transfer. The master then starts the clock to start the transmission. Then, according to the current implementation, for instance both sides, but at least the slave device send a first field containing the number of bytes to transmit. After this field, the data burst itself is transmitted, containing the number of bytes previously sent in the first field. If the slave device is not ready for transmission or if it needs to hold the transmission (for instance if a receive buffer or a FIFO is full), the slave decision part SDEP instructs the transfer hold request sending part THSP to activate the signal SPIHOLD to signify to the master SPIMD that the transfer must be stopped. The a transfer hold request reception part THRP receives the signal, detects the active state of the SPIHOLD signal and notifies the master decision part MDEP of the fact that the slave has indicated that he is currently not able to receive data, in other words, that the transmission must be temporarily put on hold. The Master decision part MDEP then stops the clock-signal SCK at the end of the current transmitted byte to suspend the transmission.

It is to be mentioned that in case there is more then one slave device the master device needs to activate and deactivate chip-select outputs to address the right slave device.

A final remark is that embodiments of the present invention are described above in terms of functional blocks. From the functional description of these blocks, given above, it will be apparent for a person skilled in the art of designing electronic devices how embodiments of these blocks can be manufactured with well-known electronic components. A detailed architecture of the contents of the functional blocks hence is not given.

While the principles of the invention have been described above in connection with specific apparatus, it is to be clearly understood that this description is made only by way of example and not as a limitation on the scope of the invention, as defined in the appended claims.

## Claims

1. Serial peripheral interface master device (SPIMD) for communicating with a serial peripheral interface slave device (SPISD) over a serial peripheral interface **CHARACTERISED IN THAT** said serial peripheral interface master device (SPIMD) comprises:
a) a send request reception part (SPIREQR), adapted to receive a send request from said serial peripheral interface slave device (SPISD), said request indicating that said serial peripheral interface slave device (SPISD) has data to send; and
b) a master decision part (MDEP), coupled with an input to an output of said send request reception part (SPIREQR) and adapted to start a data-transfer between said serial peripheral interface master device (SPIMD) and said serial peripheral interface slave device (SPISD) triggered by said send request received by said Serial peripheral interface master device (SPIMD).

2. Serial peripheral interface slave device (SPISD) for communicating to a serial peripheral interface master device (SPIMD) over a Serial peripheral interface **CHARACTERISED IN THAT** said serial peripheral interface slave device (SPISD) comprises a send request sending part (SPIREQS), adapted to send a send request to said serial peripheral interface master device (SPIMD), said send request notifying said serial peripheral master device (SPIMD) that said serial peripheral interface slave device (SPISD) has data to send.

3. Serial peripheral interface master device (SPIMD) according to claim 1, **CHARACTERISED IN THAT** said serial peripheral interface master device (SPIMD) further comprises a transfer hold request reception part (THRP), coupled with an output to an input of said master decision part (MDEP) and adapted to hold a data transfer between said serial peripheral interface master device (SPIMD) and said Serial peripheral interface slave device (SPISD).

4. Serial peripheral interface slave device (SPISD) according to claim 1, **CHARACTERISED IN THAT** said serial peripheral interface slave device (SPISD) further comprises a transfer hold request sending part (THSP), adapted to send a request to said serial peripheral master device (SPIMD) to hold a data transfer between said serial peripheral interface master device (SPIMD) and said Serial peripheral interface slave device (SPISD).

5. Serial peripheral interface master device (SPIMD) according to claim 1 and 2 **CHARACTERISED IN THAT** said send request is a interrupt-signal.

6. Serial peripheral interface **CHARACTERISED IN THAT** said serial peripheral interface comprises a send request signal notifying a serial peripheral master device (SPIMD) that a serial peripheral interface slave device (SPISD) has data to send.

7. Serial peripheral interface **CHIARACTERISED IN THAT** said serial peripheral interface comprises a transfer hold request signal indicating that a data transfer between a serial peripheral interface master device (SPIMD) and a serial peripheral interface slave device (SPISD) is to be suspended.
